# EUROPEAN PATENT SPECIFICATION

(11) **EP 4 590 231 B1**
(45) Date of publication and mention of the grant of the patent: **19.08.2026**
(21) Application number: 23776058.2
(22) Date of filing: 21.09.2023
(51) Int. Cl.: A61C 8/00

(54) **DENTAL IMPLANT**
DENTALIMPLANTAT
IMPLANT DENTAIRE

(30) Priority: 22.09.2022 EP 22197217
(43) Date of publication of application: 30.07.2025
(73) Proprietor: Institut Straumann AG, 4002 Basel (CH)
(72) Inventor: COURVOISIER, Stéphane, 2013 Colombier (CH); FAORO, Francisco Marino, 8002 Zürich (CH)
(74) Representative: Schaad, Balass, Menzl & Partner AG
(86) International application number: PCT/EP2023/076125
(87) International publication number: WO 2024/062059

(56) References cited:
- EP-B1- 0 786 967
- US-A1- 2021 338 385

## Description

### Field of the invention

The invention relates to a dental implant for implantation in bone tissue according to the preamble of claim 1.

### Background of the invention

Dental implants generally comprise a body with a threaded portion intended to be anchored in a jawbone of a patient. A superstructure, such as a crown or a bridge can be attached to the coronal end of the implant. An intermediate separate component, commonly referred to as an abutment, may be provided between the implant body and the superstructure. Such an implant is commonly referred to as a two-stage implant (or also two-piece implant). Alternatively, the abutment may be a portion formed integral with the implant body, which implant type is commonly referred to as a one-stage implant (or also one-piece implant).

Apart from being biocompatible and having sufficient mechanical strength, it is required that the implant provides good osseointegration, also referred to as osteointegration. The term osseointegration designates the direct structural and functional connection between living bone and the surface of the load-carrying implant. A good osseointegration means that, after reaching a primary stability by screwing it into the bone, secondary stability is achieved by bone remodelling creating an interface between the surface of the implant and living bone without interpositional tissue.

Primary stability is the implant immobility at the time of surgical placement, resulting from intimate contact of the implant with the bony wall of an osteotomy wherein the implant is placed. It is distinct from secondary stability, which is the result of new bone formation, i.e. bone remodelling, and osseointegration. Secondary stability is the result of formation of new bone subsequent to loss of the bone initially in contact with the implant at the time of placement of the implant.

The jawbone comprises cortical and cancellous or trabecular bone. Each of the cortical and cancellous or trabecular bone can comprise both softer and harder qualities of bone. The cortical bone is located at the exterior portion of the jawbone and consists of primary and secondary osteons with a periosteal and endosteal envelope. During growth, thickening and modelling of bone takes place via periosteal deposition and resorption. A balance is achieved in shape and thickness in adulthood. In the elderly, the endosteal resorption may exceed the periosteal deposition, resulting in an increase in size of the marrow cavity and a decrease in size of the cortical thickness. Primary osteons undergo continuous remodelling with formation of secondary osteons. Cancellous or trabecular bone is a composite of bone matrix and marrow, which is generally softer than the cortical bone. Trabecular cancellous bone consists of bone trabeculae, which are interconnected in a honeycomb non-ending porous system. The pattern of the trabeculae is oriented to mechanical stress to ensure maximal adaptation to a given stress pattern.

Dental implants that are adapted to different bone qualities are available. Straight or generally cylindrical implants, where the main portion of the body of the implant is generally straight or cylindrical, are typically used in harder qualities of bone where the primary stability is achieved without compression of the cancellous or trabecular bone. Tapered or conical implants have a tapered or slightly conical main body, which compresses the cancellous or trabecular bone as the implant is advanced into the osteotomy, and is thus suitable for softer qualities of bone. Both types of implants generally have an apical portion that is tapered to facilitate insertion of the implant. Cutting edges can be provided at the apical end of the implant to cut threads into the osteotomy as the implant is advanced. Each type of implant is designed for different qualities of bone in order to provide a suitable uniform stress pattern to achieve primary stability and promote osteointegration by stimulation of bone remodelling to achieve secondary stability. If a conical implant is used in harder qualities of bone, the torque required to insert the implant may be too high, resulting in damage to the bone and implant, as well as generation of heat which may harm the bone cells with prolonged bone remodelling as a result. Similarly, if a cylindrical implant is used in softer qualities of bone, there is a risk that insufficient stress to the bone is generated, resulting in insufficient primary stability and ultimately to loss of the implant. There is a fine balance between obtaining sufficient primary stability and not compressing the bone too much when inserting the implant, which may cause bone compression necrosis and impaired secondary stability.

US 5,902,109 describes a cylindrical implant suitable for harder qualities of bone. The cylindrical implant is designed to reduce the friction between the implant and the bone during installation of the implant in an attempt to reduce the risk of damaging the implant, tools, and bone during inserting the implant. This is achieved by providing a generally cylindrical body having a threaded outer surface for securing the implant to the walls of preformed hole in a jawbone. At least one-dimensional characteristic of the body is varied with respect to its azimuthal position around the cylinder axis so as to reduce the overall frictional contact between the implant body and the walls of the bore during installation of the implant. The thread peaks and thread roots (troughs) are each on the locus of a cylinder with each cylinder being concentric about the cylinder axis of the main body. The dimensional characteristic may be the radius of the locus of troughs of the threads. Four lobes are equally spaced around the cylinder axis. The lobes are aligned parallel around the cylinder axis with a peak diameter at the concentric locus of the thread root. The radius of the peak diameter of the lobes is substantially smaller than the radius of the thread peaks. Dwells are provided between the lobes such that no contact exists between the dwells and the bone tissue. As the implant is screwed into the bone tissue, only the lobes on the elongated body engage the bone tissue. This ensures primary stability of the implant in bone of generally harder quality, wherein compression of the bone is undesired, while at the same time reducing the friction and the amount of torque required to insert the implant. Without this substantial difference in radius of the locus of the thread peak and radius of the locus of the thread roots, the implant would not achieve the desired reduction in friction. Hence, this substantial difference is key to the design of the implant. Four self-tapping cutting means are arrayed symmetrically around the axis.

US8915735 describes a tapered implant suitable for softer qualities of bone. The implant is designed especially for application in bone with weak/soft bone quality, where cylindrical implants do not sit with sufficient stability in the bone directly after insertion. Since the implant body is generally tapered, the implant thread is arranged to force the bone substance out in essentially radial directions as a function of the extent to which the implant is screwed into the hole. Along at least part of the longitudinal direction of the implant, the thread peak is given a non-circular or eccentric configuration for the purpose of obtaining improved rotational stability in soft/weak bone, i.e. improved primary stability in soft/weak bone. Cutting edges are provided at the apical end of the implant body. Also, this tapered implant has a substantial difference between the radius of the locus of the thread peak and the radius of the locus of the thread root.

WO2015132323A1 discloses a dental implant for promoting bone growth. The dental implant comprises an elongated implant body having a coronal end portion and an apical end portion, at least one external thread and a flute arrangement having a depth. The flute arrangement has at least two helical flutes that spiral in the direction of the at least one external thread. The flutes propagate with a greater lead than the at least one thread. The flute arrangement is capable of scraping off and transferring bone debris in the coronal direction of the implant during insertion.

US2016/166358 discloses implants for anchoring the bone comprising at least one thread extending around a core in a plurality of turns from the coronal region to the apical region, said thread(s) having a thread outer diameter that may define a cylindrical portion, wherein the thread outer diameter remains constant for more than one turn around the core, and define a conical portion, wherein the thread outer diameter decreases at a thread diameter decrease rate in the direction of the rounded shape apical end. The thread(s) may have a plurality of notches spaced radially and longitudinally from one another, wherein a first notch on a first turn need not substantially overlap with a second curved notch on a second turn by more than 20%, the second turn being adjacent to the first turn in a coronal direction. The first curved notch need not substantially overlap with a third curved notch on a third turn by more than 20%, the third turn being adjacent to the first turn in an apical direction. The overlap, if any, of the second and third curved notches with the first curved notch is preferably at opposing ends of the first curved notch. Said notches defining a cutting edge where a partially semi-spherically curved portion of the notch meets the outer surface of the at least one thread, wherein said at least one thread as a self-drilling configuration capable to cut the bone (including dense/hard bone) to enlarge an opening as the implant is screwed into the bone.

US2014/329202 and US2014/023990 which is a continuation in part of US2014/329202, disclose a dental implant comprising a head, a core body extending from the head to the tip and a plurality of osteotomy blades extending outwardly from at least a portion of the core body to form a spiral thread. The implant, and particularly the osteotomy blade, is configured to self-osteotomized and directly cut the bone. The channels or apertures formed through the osteotomy blades guide the cut bone fragments and shavings as the implant is screwed into position within the bone. Said apertures are generally flat or rounded to facilitate bone growth, grafting, and integration of the implant to the bone.

Relevant prior art is also exemplified by EP 0 786 967 B1.

A problem with the prior art is that the dental surgeon has to know the quality of the bone before surgery commences in order to select the most suitable type of implant and installation procedure to achieve sufficient primary stability as well as initiate remodelling of bone and secondary stability - i.e. a generally cylindrical implant for harder qualities of bone or a generally tapered implant for softer qualities of bone. This is many times difficult or impossible, which may result in lack of primary stability and stimulation of osseointegration, or too high primary stability with reduced or prolonged induction of osseointegration and secondary stability.

The present invention addresses a widely recognized need for a dental implant that provides suitable primary stability as well as induction of bone remodelling to promote osseointegration in both bone of softer quality as well as harder quality, and thus provides for improved patient safety and/or efficacy of the dental implant procedure, and/or resulting in shortened healing time for obtaining secondary stability.

### Summary of the invention

The present invention is defined by claim 1. Preferred embodiments are defined in the dependent claims.

Accordingly, embodiments of the present invention seek tc mitigate or eliminate one or more deficiencies, disadvantages, or issues in the art, such as the above-identified. In particular, the aim of the present invention is to provide a dental implant which improves primary and secondary stability. The problem is solved by providing embodiments including a dental implant according to the appended patent claims defining the invention.

The present invention provides a dental implant for implantation in bone tissue, comprising an implant body having an apical portion, a coronal portion, and optionally an intermediate portion extending between the apical portion and the coronal portion. The dental implant defines a central longitudinal axis extending from an apical end to a coronal end of the implant.

In accordance with conventional dental terminology, "apical" refers to the direction towards the bone and "coronal" to the direction towards the teeth. Therefore, the apical end of a component is the end which, in use, is directed towards the jawbone and the coronal end is that which is directed towards the oral cavity.

Further, the dental implant comprises a threaded portion extending along the central longitudinal axis. The threaded portion comprises a core having a core surface from which at least one thread extends radially outwards. The at least one thread comprises a thread crest, a thread root arranged at a thread depth from the thread crest, and thread flanks, namely an apical flank and a coronal flank, wherein the thread crest connects the apical and the coronal flanks. The apical flank and the coronal flank extend apical and coronal to the thread root, respectively. The at least one thread extends with a helix angle with respect to the longitudinal axis along the length of the threaded portion in a helical manner, preferably in the direction of a right-handed helix, wherein the thread crest forms a helix.

The direction of the thread and the corresponding helix is defined as the direction in which one follows the thread or the helix starting from coronal towards apical.

The thread crest defines a radially outermost lateral surface of the thread, and the thread root defines a radially inner most surface of the at least one thread.

Therefore, an outer thread diameter of the threaded portion is defined by the lateral surface of the thread. In other words, the outer thread diameter of the threaded portion is determined by the virtual surface containing the lateral surface of the thread. By drawing two axially extending lines diametrically opposed on either side of the implant, each line contacting and extending along the lateral surface of the thread, the diameter at any given axial location of the threaded portion is given by the distance between these lines.

In accordance with conventional dental terminology, the thread has a "thread depth" that refers to the length of the thread, measured in the radial direction, from the core surface to the lateral surface. Therefore, the depth of the thread, at any given axial location, is the difference in radial length between the core diameter and the outer thread diameter.

The "thread profile" of the thread refers to the shape formed by the apical flank, the thread crest and the coronal flank when viewed in a longitudinal plane containing the central longitudinal axis.

The "thread pitch" of the thread represents the axial distance between two adjacent thread crests. The "thread lead" represents the axial distance between two adjacent thread crests on the same thread, in other words the axial length of one complete thread turn. For example, in an implant having a single thread, thread pitch and thread lead are the same. In an implant having a double thread, the thread pitch is the half of the thread lead.

Preferably, the at least one thread extends over the apical portion, the intermediate portion, if present, and at least a portion of the coronal portion. This embodiment ensures primary stability over the length of the implant.

In the present invention the apical portion of the implant is defined by the portion of the implant in which the outer thread diameter tapers radially inwards in the apical direction, i.e. the substantially conical portion of the implant extending on its apical side.

In preferred embodiments, the apical portion is further defined as the portion of the implant in which the core diameter tapers radially inwards in the apical direction. Thus, in these preferred embodiments, within the apical portion, the outer thread diameter and core diameter both taper radially inwards in the apical direction. The inward taper of the outer thread diameter and core diameter may be equal or differ from one another.

The coronal portion extends from the coronal end of the implant and includes at least the coronal most section of a connection interface for attaching a superstructure to the implant.

The outer diameter of the coronal portion can be tapered inwards or outwards in the coronal direction, or it may be cylindrical. In a preferred embodiment, in which the at least one thread extends over at least a portion of the coronal portion, the outer thread diameter is constant in the coronal portion. In such embodiments the core of the implant can also be cylindrical in the threaded section of the coronal portion or it may taper radially outwards in the coronal direction.

The intermediate portion is defined as the portion extending between the coronal portion and the apical portion. The intermediate portion may be cylindrical. In particularly preferred embodiments, in which the at least one thread extends over the intermediate portion, the outer thread diameter and/or the core diameter of the implant is constant in the intermediate portion.

In a preferred embodiment, the core diameter and/or outer thread diameter of the implant is constant in the coronal portion and in the intermediate portion, and in the apical portion the core diameter and outer thread diameter of the implant are tapered radially inwards in the apical direction.

In short implants, for example 4 mm implants, it is also possible that the coronal and the intermediate portion overlap and form one same portion, wherein the apical portion adjoins the coronal portion.

Further, the thread has a plurality of recesses interrupting the thread.

As a result, the thread crest provides a stress peak when the dental implant is implanted, which provides a first positive stress on surrounding bone tissue. Also, the plurality of recesses provide a stress valley, which provide a second positive stress or a negative stress, depending on the shape of the recesses, on the surrounding bone tissue. The first stress is higher than the second stress.

Hence, a non-uniform stress may be provided at the recesses as well as at the thread crest between the recesses. In other words, the thread provides a non-uniform stress along its length due to the difference in stress generated by the recesses and the thread crest. This provides for enhanced primary stability in a zone surrounding the thread crest, and induced bone remodelling at a zone surrounding the recesses.

A radially inner most point of the recess is defined as a point of the recess surface situated at the shortest radial distance from the longitudinal axis. A recess may have a plurality of radially inner most points depending on its shape. For example, radially inner most points can lie on a line parallel to the central longitudinal axis.

A base of the recess is defined as a region of the recess surface that is planar, thereby forming a flat base.

According to the invention, recesses of the plurality of recesses have each time a base that is planar forming a flat base of the recess. Further, the flat base extends in a plane parallel to the central longitudinal axis or to a plane parallel to a plane tangent to the core surface of the implant at a point corresponding to the intersection of the core surface with a radius of the core crossing the radially inner most point of the recess.

In the latter case the flat base may be coplanar with, i.e. extend in, a plane tangent to the core surface of the implant at a point corresponding to the intersection of the core surface with a radius of the core crossing the radially inner most point of the recess, or it may extend in a plane parallel to this tangential plane.

These embodiments provide for a good primary stability resulting from a linear and regular increase of the insertion torque during insertion. Further, these embodiments provide for a large opening of the recesses in which osseointegration can take place optimally. This is evidenced by a good bone remodelling and osteointegration observed around test implants in the test results of the experimental part below.

According to an embodiment of the invention it is therefore disclosed a dental implant for implantation in bone tissue, preferably in a drill hole or in an extraction socket, comprising an implant body having an apical portion, a coronal portion, and preferably an intermediate portion extending between the apical portion and the coronal portion; a central longitudinal axis extending from the apical portion to the coronal portion; a threaded portion extending along the central longitudinal axis, the threaded portion comprising a core having a core surface from which at least one thread extends radially outwards, the at least one thread having a thread crest, a thread root arranged at a thread depth from the thread crest, and thread flanks extending between the thread crest and the thread root; the thread extending in a helical manner over the apical portion, the intermediate portion, if present, and a least a portion of the coronal portion; wherein the thread has a plurality of recesses interrupting the thread.

The recesses have each time a surface and a base defined as a region of the surface that is flat. Further, for the dental implant disclosed, each base of the plurality of recesses extends in a plane parallel to the central longitudinal axis or to a plane parallel to a plane tangent to the core surface at a point corresponding to the intersection of the core surface with a radius of the core crossing the radially inner most point of the recess.

In other words, each base of the plurality of recesses extends in a plane parallel to the central longitudinal axis or in a plane parallel to, or coplanar with, a plane tangent to the core surface at a point corresponding to the intersection of the core surface with a radius of the core crossing the radially inner most point of the recess.

Preferably, the flat base of each recess extends in a plane parallel to, or coplanar with, a plane tangent to the core surface of the implant at a point corresponding to the intersection of the core surface with a radius of the core crossing the radially inner most point of the recess. In other words, the flat base of each recess extends in a plane parallel to, or including, the axial extension of the core surface at the location of the recess. When the core of the implant is cylindrical, the recesses found in this area of the implant will therefore extend in a plane parallel to the longitudinal axis. When the core of the implant is tapered, thus forming a conical surface, the recesses in this area of the implant will extend in a plane having the same taper angle relative to the longitudinal axis as the conical surface. Creating planar surfaces which are coplanar or parallel to a plane tangent to the core surface eases production of the recesses.

In each of the above embodiments, variations in the profile of the recesses and their arrangement can be used to create non-uniform stress profiles of the implanted implant.

The stress profile of the implanted implant can be modified by increasing a recess depth in at least a portion of the implant, or constantly increasing or decreasing the recess depth from the coronal portion to the apical portion instead of keeping a substantially uniform recess depth, as discussed below for various embodiments. Substantially uniform is to be understood as including also deviating slightly from uniform within manufacturing tolerances.

In a preferred embodiment, the thread has a plurality of recesses in at least a portion of the coronal region, in the intermediate portion, if present, and in at least a portion of the apical region.

Preferably, the thread has a plurality of recesses over the whole length of the apical portion, wherein the enhanced primary stability and induction of bone remodelling is provided for also at the apical portion. In prior art designs the primary stability is impaired in the apical region compared to the present design.

In a preferred embodiment, the surface of each of the plurality of recesses is planar and extends in the plane of the base of the recess. In other words, the recess is formed as a flat plateau. This configuration of the recesses can be manufactured in a simple manner while leading to results in term of stability and osseointegration that are similar to those observed for recesses having a base extending in a plane as described above.

According to the present invention, the base of each of the plurality of recesses is each time at a radial distance from the longitudinal axis that is equal to or greater than the radius of the core at the axial location of the radially inner most point. For this reason, the invention provides for a good mechanical stability of the implant since the recesses do not extend in the core. The radially inner most point of each of the plurality of recesses can have a uniform radial distance from the core or this radial distance can vary between recesses.

The recess depth is defined as the radial distance from the radially inner most point of the recess to the thread crest of the thread at the location in which the recess is formed.

In a preferred embodiment, the radially inner most points are each time at a radial distance substantially equal to the radius of the core. In other words, the radially inner most point of each recess lies substantially on the surface of the core, i.e. a radius crosses each time the radially inner most point of the recesses and the external surface of the core substantially at the same point. This embodiment provides for a maximum amplitude for the stress difference between stress valleys corresponding to recesses and stress peaks corresponding to thread crests. Further, it provides for a substantially homogeneous stress profile at least at the base of each of the recesses since the recess depth is kept substantially constant over the base.

In a preferred embodiment, the radially inner most point of each of the plurality of recesses is located at a radial distance that is greater than the radius of the core, wherein the difference between the radial distance of the radially inner most point and the radius of the core ranges from 30% to 5% of the thread depth. In other words, the radially inner most point is radially spaced from the core by a distance of 5% to 30% of the thread depth. This embodiment provides for a reduced amplitude of the stress difference between stress valleys (which correspond to the recesses) and stress peaks (which correspond to the thread crests). Preferably, the difference between the radial distance and the radius of the core ranges from 20% to 10% of the thread depth for an optimized secondary stability.

In a preferred embodiment, the radially inner most point of each of the plurality of recesses arranged in the apical portion is at a radial distance that is greater than the radius of the core at the axial location of the radially inner most point, wherein the difference between the radial distance of the radially inner most point and the radius of the core ranges from 5% to 50% of the thread depth. In other words, the radially inner most point is radially spaced from the core by a distance of 5% to 50% of the thread depth. This embodiment provides for a reduced amplitude of the stress difference between stress valleys (corresponding to the recesses) and stress peaks (corresponding to thread crests) in the apical portion of the implant, contributing to an enhanced secondary stability in the apical region. Preferably, the difference between the radial distance and the radius of the core ranges from 10% to 30% of the thread depth. Most preferably, the difference between the radial distance and the radius of the core represents 20% of the thread depth for an optimized secondary stability.

For the sake of clarity, it is noted that "substantially" referring to distances or positions in the previous paragraphs is to be understood as including deviation lying within manufacturing tolerances or design tolerances.

In a preferred embodiment, the radially inner most points of the recesses arranged in the intermediate portion are at a radial distance from the longitudinal axis that is greater than the radial distance of the radius of the core at the axial location of the radially inner most point, this radial distance varying between recesses. In other words, the radially inner most points of the recesses are radially spaced from the core by different amounts. The radial distance between the radially inner most point and the core can decrease in the coronal to apical direction such that the depth of the recesses progressively increases in the apical direction.

Preferably the radial distance between the radially inner most point and the core decreases in the apical direction by a rate chosen in a range from 50% to 5% of the coronal-most radial distance. This embodiment provides for a progressively decreasing stress at the recesses from coronal to apical along the implant, contributing to an enhanced secondary stability along the implant. Preferably, the rate is chosen in the range from 30% to 10% of the thread depth for an optimized secondary stability.

As mentioned, the thread has a plurality of recesses interrupting the thread. A thread interruption refers to a recess formed in the thread such that a region of the thread is locally completely or at least partially carved out with respect to the thread crest. The helix formed by the thread crest, i.e. the helical curve running on the radially outermost surface of the thread is consequently interrupted.

The intersection of the recess surface with the thread forms a borderline of the recess. The intersection of the recess borderline with the thread crest defines a coronal border point and an apical border point of the recess on the thread crest. Referring to the direction of the thread from coronal to apical, the thread crest interruption extends from the coronal border point, which can be seen as a trailing border point of the recess, to the apical border point, which can be seen as a leading border point of the recess.

The circumferential extension of the recesses can be characterized by a circular sector, as seen in a plane perpendicular to the longitudinal central axis, subtended by two radii crossing the coronal border point and an apical border point of the recess, respectively.

The specification of the circular sector in a transverse plane to the longitudinal axis, the transverse plane forming an angle corresponding to the helix angle with the longitudinal central axis can be preferred when the recesses extend substantially symmetrically to the thread crest. The specification of the circular sector as seen in the transverse plane, also referred to below as the plane of the thread, is preferred in order to allow a simpler manufacturing of the implant, in particular when the recesses are formed by the same tool as the thread or threads.

However, also in this latter case, it is possible to characterize the circular sector by a circular sector in the plane perpendicular to the longitudinal central axis, wherein the corresponding circular sector angle is smaller than the circular sector angle measured in the transverse plane by a factor depending on the helix angle.

Preferably the recesses have the same shape to allow a simple production process.

In a preferred embodiment, the flat base extends in a plane that does not include the longitudinal central axis. This reduces or prevents the cutting effect of the recesses, thus leaving more bone material in the vicinity of the implant.

In a preferred embodiment, the flanks of each of the recesses project from the flat base radially outwards in a widening manner, preferably in a curved manner, in the direction of the trailing border point and of the leading border point, respectively. This embodiment provides for at least partially flat regions in the recesses in which osseointegration can be promoted as opposed to recesses with a steep profile, for example V-shaped, at the bottom of which osseointegration may develop more slowly.

In a preferred embodiment, the bases extend each time circumferentially over a circular sector having each time an angle of 30° to 150°. Preferably, the circular sector has an angle of 60° to 120°. On the one hand, the extension of the recesses is broad enough to create stress valleys, in which secondary and therefore osseointegration is supported, and on the other hand, the extension of the recesses is not broad enough to significantly reduce primary stability. More preferably, the circular sector has an angle of 100°. This configuration optimizes both aspects previously mentioned. The extension of the circular sector can be measured in reference to either a plane perpendicular to the longitudinal axis or to the plane of the thread. Preferably the extension is measured in the plane of the thread.

In a preferred embodiment, the flanks of each of the recesses project from the flat base radially outwards in a cupped form, preferably extending each time symmetrically to a longitudinal plane comprising the central longitudinal axis. The surface of the recesses is concave with respect to longitudinal central axis. This embodiment provides for a stress profile at the recesses having a symmetrical distribution along the longitudinal central axis, contributing to a homogeneous stimulation of the osseointegration.

Further, in one embodiment, the recesses may have a cross-section each time in the form of an arc arranged concave to the longitudinal central axis, as seen in a plane extending perpendicular to the longitudinal central axis, preferably the arc extending on each side of the planar base symmetrically to a longitudinal symmetry plane comprising the central longitudinal axis and the radially inner most point. The arc can be circular or elliptical to allow a simple manufacturing, but other curved profiles are also possible. Preferably, the radially inner most points of the recesses form each time a base line of the recess running substantially parallel to the longitudinal central axis and in the longitudinal symmetry plane of the recess. The advantage of this embodiment is also a symmetrical distribution along the longitudinal central axis of the stress in the valley of each recess.

Alternatively, the recesses according to the previous embodiments can extend each time symmetrically to an inclined plane inclined by the helix angle with respect to the central longitudinal axis. In other words, the inclined plane is perpendicular to the local tangent to the surface formed by the thread crest, in the region in which the recess is formed. Consequently, the shape of the recess in the region of the coronal border point and the apical border point are symmetrical and the stress at these border points is also distributed symmetrically. This configuration promotes a stimulation of the osseointegration in the border point region of a recess.

In a preferred embodiment, the recesses extend each time axially on each side of the thread crest by up to 50% of the thread pitch. Preferably, the recesses extend each time axially on each side of the thread crest by up to 30% of the thread pitch. This embodiment provides for a stress profile in the recesses with an optimized axial extension. At the same time, the adjacent portions of the thread, viewed axially in the coronal direction and in the apical direction, are not interrupted by the recess. As a result, the secondary stability is optimized while keeping the primary stability conferred by the thread almost intact.

In some embodiments, the recesses can extend up to a seam, i.e. a start, of the apical flank of the adjacent proximal thread crest and up to a seam, i.e. a start, of the proximal flank of the adjacent apical thread crest. In other words, the recess extends over the full axial length of the thread crest.

In a preferred embodiment, the recesses extend each time circumferentially over a circular sector having an angle of 30° to 150°. Preferably, the circular sector has an angle of 60° to 120°. On the one hand, the extension of the recesses is broad enough to create stress valleys, in which secondary stability and therefore osseointegration is supported, and on the other hand, the extension of the recesses is not broad enough to significantly reduce primary stability. More preferably, the circular sector has an angle of 100°. This configuration optimizes both aspects previously mentioned. The extension of the circular sector can be measured in reference to either a plane perpendicular to the longitudinal axis or to the plane of the thread. Preferably, the extension of the circular sector is measured in reference to the plane of the thread.

In a preferred embodiment, the border of the recesses is chamfered. The recesses can be designed and produced with a chamfer. Alternatively, starting from recesses which are not chamfered, a chamfered border can result from surface treatment like sandblasting and/or etching. A chamfered border is also beneficial to secondary stability.

In a preferred embodiment, two consecutive recesses of the plurality of recesses, when looked at the recesses along the outer surface in an axial direction, are each time free of an intersection zone. In other words, there is no direct communication between two recesses, such that for example bone chips cannot be transported in the recesses along the threaded portion. Such an embodiment combines optimal mechanical stability due to the separation between the recesses and still provides a good osseointegration due to the provision of stress valleys by the recesses.

In a preferred embodiment, two consecutive recesses of the plurality of recesses each time overlap circumferentially at least partially. In other words, the circular sector angles subtended by two consecutive recesses overlap. Preferably, the circular sector angles overlap each time by 10% to 30% of the circular sector angles. More preferably, the circular sector angles overlap each time by 20%. The overlapping of two consecutive recesses, i.e. two stress valleys, forms a continuous succession of stress valleys. The result is the formation of a continuous stress region in which the secondary stability is promoted. It must be noted that the overlap of the circular sector angles subtended by two consecutive recesses does not imply that the recesses have an intersection. Indeed, the provision of an intersection also depends on the axial extension of the recesses. The extension of the circular sector can be measured in reference to either a plane perpendicular to the longitudinal axis or to the plane of the thread. Preferably, the extension of the circular sector is measured in reference to the plane of the thread.

In a preferred embodiment, two consecutive recesses of the plurality of recesses have each time an intersection of their respective surface forming a crest line. The crest line runs at a radial distance from the core, wherein a radially inner most point of the crest line lies at a radial distance from the core corresponding to 5% to 50% of the thread depth. Preferably, the radial distance from the core is 10% to 30% of the thread depth. This can be the case for example when the two consecutive recesses follow each other on the same turn of the thread. It is also possible that two consecutive recesses have an intersection while being formed on different turns of the thread or on different threads. In this case the radially inner most point of the crest line can lie on the core. In other words, the radial distance from the core to the radially innermost point of the crest line is zero.

The shape of the crest line depends on the shape of the recesses. This shape can be chosen such that the crest line runs at a minimum distance from the core, such that the intensity of the stress in the recesses can also be set a level for an optimal secondary stability. Most preferably, the radial distance from the core is 20% of the thread depth. The result is the formation of a continuous stress region in which the secondary stability is further promoted while ensuring mechanical stability of the implant. Further, the minimum distance from the core can be chosen such that bone chips are not significantly transported in the successive recesses along the threaded portion.

In a preferred embodiment, the plurality of recesses are circumferentially offset with respect to each other such that an angle subtended by the radii crossing corresponding points, preferably the radially inner most points, of two consecutive recesses is each time preferably constant over the length of the implant, and chosen in a range from 60° to 120°, measured in a plane perpendicular to the central longitudinal axis. The provision of a constant angle ensures a homogeneous distribution of the stress valley around the implant, while a range of 60° to 120° for this angle allows to maintain a mechanical stability of the implant.

In a preferred embodiment, the plurality of recesses is arranged along a helical path running in the same direction as the thread, preferably extending up to the apical end of the implant. The helical path formed by the recesses ensures a distribution over the whole implant surface of a succession of stress valleys. This embodiment provides for the formation of a stress region running helically around the implant and along which the secondary stability is promoted. Despite the helical nature of the sequence of recesses, the plurality of recesses does not enable bone chips to be transported and distributed along the length of the threaded portion. Indeed, two successive recesses can be free from a direct communication with each other or the crest line formed between two consecutive recesses running at a radial distance from the core hinders this transport.

In a preferred embodiment, the helical path extends in at least one turn from the coronal region to the apical region. This embodiment ensures secondary stability over the length of the implant. Further, experimental results have shown good osseointegration over the length of the implant. Preferably, the helical path extends in a plurality of turns, more preferably two turns, from the coronal region to the apical region to ensure optimal results.

In a preferred embodiment, two or more helical paths extend preferably in at least one turn from the coronal region to the apical region. This embodiment ensures a denser distribution of the recesses over the length of the implant and reinforces the effect obtained for at least one turn.

In a preferred embodiment, the plurality of recesses are arranged along a helical path running in the opposite direction as the thread, preferably extending up to the apical end of the implant. This embodiment has the same advantages as the previous embodiment.

In a preferred embodiment, the plurality of recesses can be arranged along at least one straight line extending from apical to coronal. For the sake of symmetry of the distribution of the stress valleys and the primary as well as secondary stability of the implant, two, three or four straight lines are preferred, each time arranged at the same circumferential distance from each other. This has the advantage of a homogeneous osseointegration over the length of the implant.

In a preferred embodiment, the plurality of recesses are distributed in a plurality of groups, wherein the recesses of each group are arranged, preferably in a centered manner, each time along a straight line associated to each group, the straight line extending from apical to coronal. The straight lines associated to each group form a plurality of straight lines that define with the central longitudinal axis a plurality of planes extending longitudinally. As mentioned above, for the sake of symmetry of the distribution of stress and for the stability, the plurality of planes are separated from each other by a same angle as seen in plane perpendicular to the longitudinal central axis.

In a further preferred embodiment, the recesses of each group of the plurality of groups are present on the straight line associated to the group once on each thread turn in which recesses are formed.

In a more preferred embodiment, the recesses of each group are present on the straight line associated to the group every two thread turns in which recesses are formed. As an example of this latter arrangement with three groups of recesses, a recess of the first group is formed on a first turn of the thread, for example the most apical turn of the thread, and overlap, seen axially, - because they are on the same straight line associated with the first group - a further recess of the first group formed on a third turn of the thread, and still a further recess of the first group is formed on a fifth turn. Then, a recess of the second group is formed on a second turn of the thread, and overlap, seen axially, a further recess of the second group formed on a fourth turn of the thread, and still a further recess of the second group is formed on a sixth turn. Recesses of the third group can be present on the same turns as the recesses of the first group of recesses.

While the recesses can be placed along the full length of the threaded portion, in either a helical or straight arrangement as discussed above, in other embodiments a section of the threaded portion can be kept free of recesses. Leaving a section of the thread free of recesses can help to ensure primary stability of the implant. Preferably therefore the threaded portion comprises at least one full thread turn which is free of recesses. This "recess-free" section of the thread can be located in the apical, intermediate or coronal portion of the implant. Preferably the at least one full thread turn which is free of recesses is bordered both apically and coronally by sections of the threaded portion having recesses according to the present invention. Preferably at least two full adjacent thread turns are free of recesses. The adjacent thread turns can be on the same or separate threads, e.g. a single start thread may have at least two consecutive thread turns which are free of recesses, or each thread in a double lead thread may comprise at least one thread turn which is free of recesses, these thread turns being nested with one another. Preferably the implant comprises a section of the threaded portion which is free of recesses over a rotation of at least 720°, this section being bordered coronally and apically by recesses in accordance with the present invention.

In a preferred embodiment, the thread is a multiple lead thread, preferably a double lead thread. The provision of a double lead thread results in a faster insertion of the implant into the bone.

In an embodiment having a multiple lead thread, specifically a double lead thread, each thread may comprise the features of the at least one thread disclosed above. An exemplary combination taking into account the provision of two threads is given below without limiting the combinations possible.

For example, in the case of a double lead thread comprising the at least one thread and a second thread running both in the same thread direction, a recess interrupting the at least one thread can be followed in the thread direction by a recess interrupting the second thread. In this case, two successive recesses of the plurality of recesses belong each time to two different threads. As mentioned, the arrangement of the plurality of recesses on the at least one thread can be circumferentially offset. In the case of a double lead thread, two consecutive recesses can be offset by 60°, for an example, by the provision of an offset of 120° between two consecutive recesses of the at least one thread and of the second thread, respectively, wherein the starting point of the at least one thread and of the second thread are offset by 60°. Further, the circular sector angles subtending the recesses of the at least one thread and of the second thread can be each time the same, for example 100°, or different, for example 60° or the at least one thread and 140° for the second thread. The extension of the circular sector can be measured in reference to either a plane perpendicular to the longitudinal axis or to the plane of the thread. Preferably, the extension of the circular sector is measured in reference to the plane of the thread.

In a preferred embodiment, the implant can be made of metal, preferably titanium or a titanium-zirconium alloy containing 13 wt-% to 17 wt-% of zirconium.

### Brief description of the drawings

These and other aspects, features and advantages of which embodiments of the invention are capable of, will be apparent and elucidated from the following description of embodiments of the present invention, reference being made to the accompanying drawings, in which
- Fig. 1: is a perspective view of a first embodiment of the dental implant;
- Fig. 2: is a longitudinal cross-section of the dental implant of Fig. 1;
- Fig. 3: is a side view of the dental implant of Fig. 1;
- Fig. 4: is a side view of a second embodiment of the dental implant;
- Fig. 5: is a longitudinal cross-section of the dental implant of Fig. 4;
- Fig. 6: is a transverse cross-section of the dental implant of Fig. 4;
- Fig. 7: is a view from apical to coronal along the longitudinal axis of the dental implant of Fig. 4;
- Fig. 8: is a perspective view of a third embodiment of the dental implant;
- Figs. 9a-9f: are cross sectional FEM simulations of a control implant;
- Figs. 10a-10i: are cross sectional FEM simulations of a test implant according to the third embodiment of the dental implant;
- Fig. 11: is a representation of four test implants and four control implants placed in a toothless mandible of a test animal;
- Fig. 12: shows a comparison of the insertion torque curves and the maximum insertion torque for the four test implants and four control implants mentioned in relation to Fig. 11;
- Fig. 13: shows histological sections of bone remodelling around the four test implants and four control implants mentioned in relation to Fig. 11; and
- Fig. 14: shows a further embodiment similar to the embodiment of Fig. 8 having a region free of recesses.
Specific embodiments of the invention now will be described with reference to the accompanying drawings. This invention may, however, be embodied in many different forms and should not be construed as limited to the embodiments set forth herein; rather, these embodiments are provided so that this disclosure will be thorough and complete, and will make the present invention understandable by those skilled in the art.

The terminology used in the detailed description of the embodiments illustrated in the accompanying drawings is not intended to be limiting of the invention. In the drawings, like numbers refer to like elements.

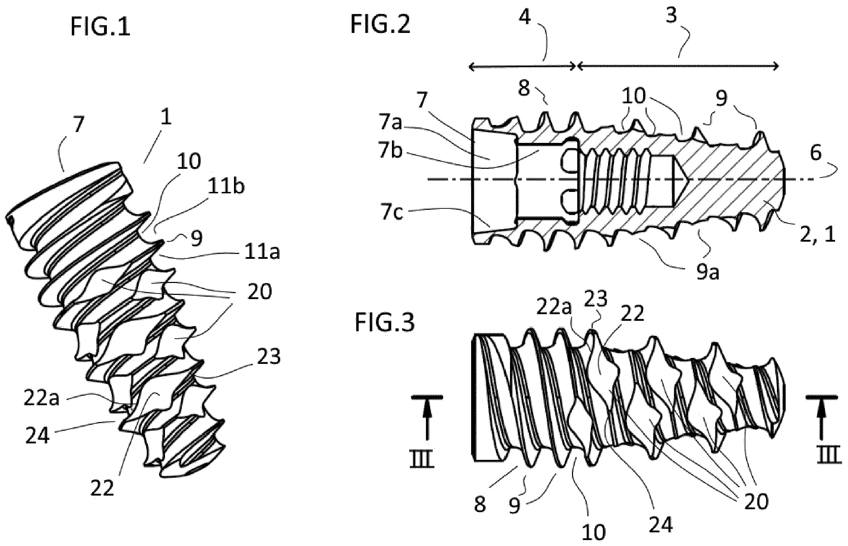

Figs. 1-3 illustrate a first embodiment of a dental implant 1 (referred to as the implant in the following) for implantation in bone tissue.

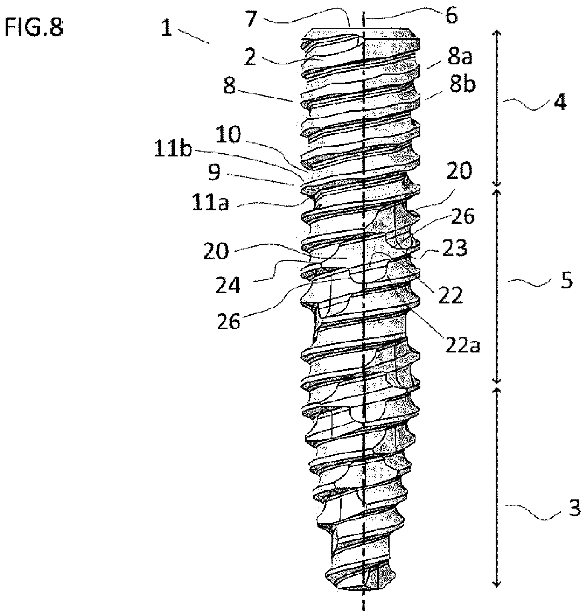

The implant 1 comprises an implant body 2 having an apical portion 3 having an essentially conical shape and a coronal portion 4 having an essentially cylindrical shape. In the first embodiment and second embodiment illustrated in Fig. 1 to 3 and Fig. 4 to 7, respectively, a cylindrical intermediate portion 5 extending between the apical portion 3 and the coronal portion 4 is not present, in contrary to the third embodiment illustrated in Fig. 8. The first and second embodiments are typical for short implants for example with a length of 8 mm, and the third embodiment is typical for longer implants for example with a length of 18 mm.

A central longitudinal axis 6 extends from the apical portion 3 to the coronal portion 4. A connection interface 7 for attaching a superstructure to the implant 1 is provided at the coronal end of the implant 1.

In the first, second and third embodiments, the connection interface 7 is an internal connection interface and the implant is a two-stage implant.

The implant 1 comprises a blind bore 7a extending from the coronal end of the implant along the central axis 6 of the threaded portion, the blind bore 7a comprising an anti-rotation means 7b having a non-circular-symmetric cross-section in a plane perpendicular to the central axis 6 and, apical of said anti-rotation means, a threaded section. The blind bore 7a further comprises, coronal of the anti-rotation means 7b, a conical portion 7c tapering radially outwards in the coronal direction. Such a tapered portion 7c can form a secure seal with a complementary shaped abutment, thus preventing bacteria from entering the implant 1.

In other embodiments, the connection interface 7 is an external connection interface. The implant may also comprise a one-stage implant. Further details of the connection interface will not be presented herein.

The threaded portion comprises a core having a core surface from which at least one thread 8 extends radially outwards.

The at least one thread 8 extends over the apical portion 3 and the coronal portion 4. In the first, second and third embodiments, the implant 1 comprises a double lead thread, each thread having a start. Reference will be made to a thread 8 in the following.

The thread 8 comprises a thread crest 9, a thread root 10, and thread flanks 11a-11b extending between the thread crest 9 and the thread root 10. The thread crest 9 is the outermost portion of the thread 8 along the central axis 6, i.e. the major radius of the thread 8 around the circumference of the body 2. The thread root 10 is the inner most portion of the thread, i.e. the minor radius of the thread 9 around the circumference of the body 2. The thread flanks 11a-11b extends from, and on each side of, the thread crest 9 to a thread root 10 adjacent the thread crest 9. The thread root 10 adjacent the thread crest 9 is the thread root 10 of the adjacent lead.

The thread crest 9 forms a cylindrical helix in at least a portion of the coronal portion 4. Hence, the thread crest 9 forms a generally cylindrical implant thread at the crest 9 in the coronal portion 4. This provides for primary stability in bones of softer quality and bones of harder quality.

Furthermore, the thread crest 9 forms a conical helix in the entire apical portion 3. The conical helix is a three-dimensional curve that lies on a cone or truncated cone. Hence, the thread crest comprises a combination of a conical helix and a cylindrical helix.

Further, the thread 8 has a plurality of recesses 20 interrupting the thread 8.

In the present embodiment, the apical portion 3 of the implant is defined by the portion of the implant which outer thread diameter tapers radially inwards in the apical direction, i.e. the substantially conical portion of the implant extending on its apical side. The coronal portion 4 of the implant is defined as the portion extending from the coronal end of the implant to the proximal start of the apical portion 3.

In the first and second embodiments, the thread 8 has a plurality of recesses 20 in at least a portion of the coronal portion 4 and in the apical region 3, i.e. the conical region of the implant 1. As a result, the tread crest provides a stress peak when the dental implant is implanted, which provides a first positive stress on surrounding bone tissue. Also, the plurality of recesses provide stress valleys, which provide a second positive stress on the surrounding bone tissue. The first stress is higher than the second stress.

Each of the recesses 20 has a recess surface, a region of which is flat and defines the flat base of the recess. A radially inner most point 22 is defined as a point of the recess surface situated at the shortest radial distance from the longitudinal axis 6. The radially inner most point can also be identified as the bottommost point of the recess.

Presently, the flat base comprises each time the radially inner most point 22 that is arranged at a radial distance from the central longitudinal axis 6 equal to the radius of the core. In other words, the bottom of the thread lies on the core. The flat base is each time parallel to the longitudinal axis 6. In the cross-section represented in Fig.2, portions 9a of the thread are interrupted by the recesses which are protruding from the core.

The recesses 20 are formed such that the thread 8 is partially carved out and the helix formed by the thread crest 9, i.e. the helical curve running on the radially outermost surface of the thread 8 is interrupted.

The intersection of the recess surface with the thread forms a borderline 22a of the recess. The intersection of the recess borderline 22a with the thread crest 9 defines a coronal border point 23 and an apical border point 24 of the recess 20 on the thread crest 9. Referring to the direction of the thread, the thread crest interruption extends from the coronal border point to the apical border point.

The recesses 20 in the first embodiment of Fig. 1 to 3 have a substantially cupped form with flanks projecting each time from the flat base radially outwards in a curved widening manner around the radially inner most point. the surface of the recess is concave with respect to longitudinal central axis 6.

The circumferential extension of the recesses can be characterized by a circular sector, as seen in a plane perpendicular to the longitudinal central axis, subtended by two radii crossing the coronal border point 23 and an apical border point 24, respectively. In the first embodiment, the recesses extend circumferentially over a circular sector having an angle of approximately 150° and two consecutive recesses of the plurality of recesses each time overlap circumferentially by approximately 20% of the circular sector angles, i.e. approximately 30°.

An angle subtended by the radii crossing the radially inner most points of two consecutive recesses is each time 60°, measured in a plane perpendicular to the central longitudinal axis. In the embodiment illustrated, the thread is a double lead thread, wherein both threads run in the same right-handed direction and are offset by 60°. Seen on each thread, the angle subtended by the radii crossing the radially inner most points of two consecutive recesses is therefore each time 120°.

The plurality of recesses 20 are distributed in a plurality of groups, wherein the recesses of each group are arranged each time along an imaginary straight line associated to each group, the straight line extending from apical to coronal. In the embodiment of fig. 1, three groups of recesses are visible, each group of recesses being centered on a straight line associated to the group and extending from apical to coronal. Each group comprises three recesses and, in each group, a recess is present every two thread turns.

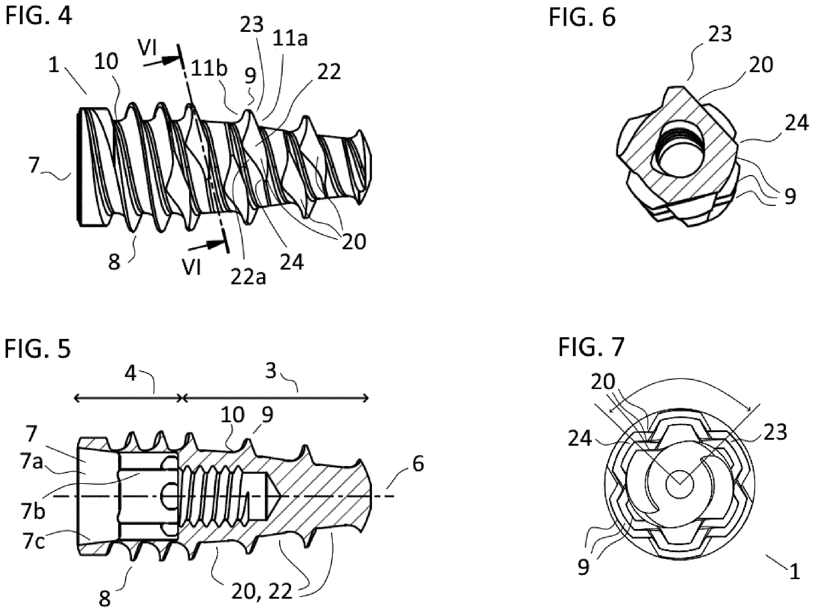

The second implant illustrated in Figs. 4-7 is similar to the first embodiment of the dental implant with the exception of the shape of the recesses. Therefore, only the differences will be described below.

In contrast to the first embodiment having recesses with a cup-shaped form which flanks project from the flat base, the recesses of the second embodiment have a flat base forming the whole surface of the recess, i.e. there are no flanks of the recesses projecting radially. In other words, the recess is formed as a flat plateau coplanar with a plane tangent to the core at the radially inner most point of the recess, as can be seen in Fig. 5 and 6. The radially inner most point of the recesses is each time situated on the core and the flat base is tangent to the core at the radially inner most point.

Fig. 8 illustrates a third embodiment of a dental implant 1 for implantation in bone tissue.

The implant 1 comprises an implant body 2 having an apical portion 3, a coronal portion 4, and, in contrast to the first and second embodiment, an intermediate portion 5 extending between the apical portion 3 and the coronal portion 4. A central longitudinal axis 6 extends from the apical portion 3 to the coronal portion 4.

An internal connection interface 7 for attaching a superstructure to the implant 1 is provided at the coronal end of the implant 1. The implant is also a two-stage implant.

In the illustrated embodiment, the implant 1 comprises a double lead thread 8a, 8b extending over the apical portion 3, the coronal portion 4, and the intermediate portion 5, with two starts of the thread. Reference will be made to a thread 8 in the following.

The thread crest 9 forms a cylindrical helix in at least a portion of the coronal portion 4 and in the intermediate portion 5. Hence, the thread crest 9 forms a generally cylindrical implant thread at the crest 9 in the coronal portion 4 and the intermediate portion 5.

Further, the thread 8 has a plurality of recesses 20 interrupting the thread 8.

In the present embodiment, the apical portion 3 of the implant is defined by the portion of the implant which outer thread diameter tapers radially inwards in the apical direction, i.e. the substantially conical portion of the implant extending on its apical side. The coronal portion 4 of the implant is defined as the portion extending from the coronal end of the implant and including the coronal most section of the connection interface. The intermediate portion 5 is defined as extending between the coronal portion and the apical portion.

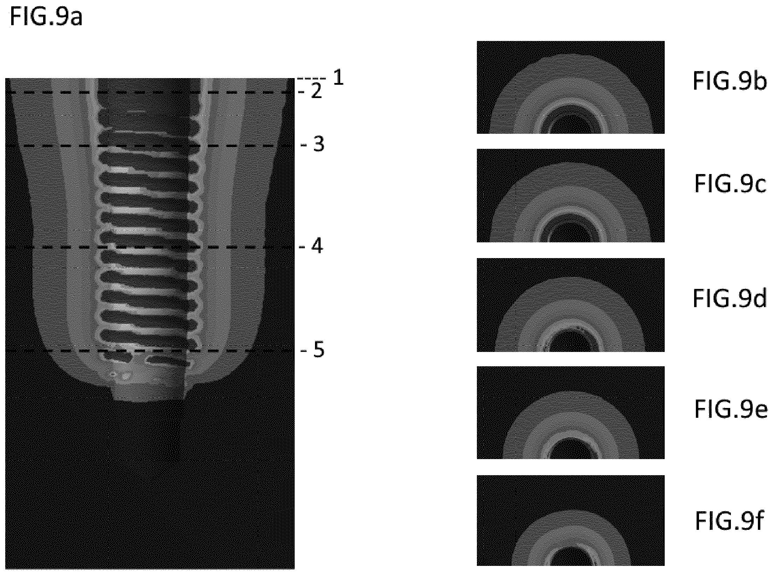

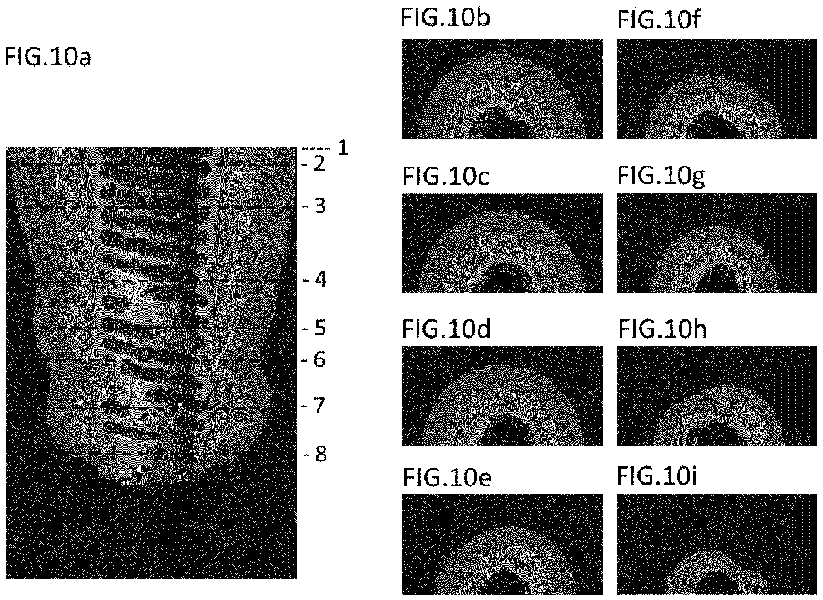

The thread 8 has a plurality of recesses 20 in the intermediate region 5 and in the apical region 3. As a result, the thread crest provides a stress peak when the dental implant is implanted, which may provide a first positive stress on surrounding bone tissue. Also, the plurality of recesses may provide stress valleys, which provide a second positive stress on the surrounding bone tissue. The first stress is higher than the second stress. This will be further explained below with regard to Figs. 9a-f and 10a-i.

The recesses have each time a flat base which radially inner most points 22 are at a radial distance from the central longitudinal axis 6 that is equal to the radius of the core.

The intersection of the recess surface with the thread forms each time a borderline 22a of the recess. The intersection of the recess borderline 22a with the thread crest 9 defines a coronal border point 23 and an apical border point 24 of the recess 20 on the thread crest 9. Referring to the direction of the thread, the thread crest interruption extends from the coronal border point 23 to the apical border point 24.

In the present embodiment, two consecutive recesses each time have an intersection. A crest line 26 is formed by the intersection of the surface of two consecutive recesses and runs at a radial distance from the core.

The surface of the recesses 20 comprises a flat base forming a plateau parallel to the longitudinal central axis 6 as can be seen in Fig. 8, and extending from the coronal border point 23 to the apical border point 24 of the recess. The apical and proximal flanks of the recesses project radially outwards from the flat base in a widening curved manner in the apical and the proximal direction, respectively, and extend axially on each side of the thread crest by a distance corresponding to approximately 80% of the distance between two thread crests.

As can be seen in fig. 8, the plurality of recesses are arranged along a helical path running in the same direction as the thread, extending up to the apical end of the implant.

In some embodiments, the apical portion 3 may be shaped and configured for easy insertion of the dental implant 5 into a hole in a jawbone, as well as providing primary stability of the dental implant 2 when fully inserted into the hole. The apical portion 3 may be shaped and configured such that it may be inserted into a cylindrical hole which is slightly underprepared, i.e. the maximum diameter of the drill used to provide the hole is slightly smaller than the maximum diameter of the implant. The apical portion may have a more pronounced taper compared to the intermediate portion 5 with a minimum diameter at the apical end of the implant that is smaller than the diameter of the opening of the hole. The thread 8 may run all the way to the apical end of the implant. These elements each contribute to the thread engaging with the bone without having a thread cutter at apical end of the implant.

The apical portion 3 may have recesses at the thread root, wherein the enhanced primary stability and induction of bone remodelling is provided for also at the apical portion. In prior art designs the primary stability, particularly at the location of the thread cutter, is impaired compared to the present design.

The coronal portion 4 may be generally straight and shaped for apposition against cortical bone. It may be gradually reduced towards the coronal end of the implant. In some embodiments, thread 8 ends at a non-threaded cylindrical section at the coronal end. Hence the difference in stress around the circumference of the implant is reduced in this area. This provides for a balance between primary stability and induction of bone remodelling also in the cortical bone, which is generally harder than the cancellous or trabecular bone at the area of the intermediate portion 5.

The intermediate portion 5 may be generally straight and shaped for apposition against cancellous or trabecular bone and provides for primary stability as well as induction of bone remodelling.

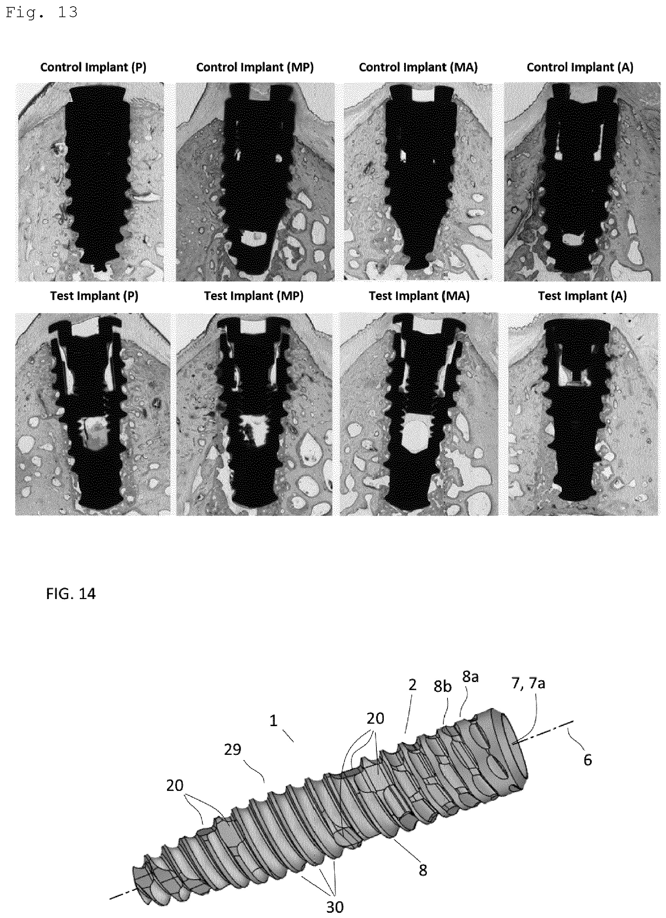

Fig. 14 discloses a further embodiment that is similar to the embodiment disclosed in Fig. 8. Same features as in Fig. 8 have same reference numbers and are not discussed further.

While the recesses 20 can be placed along the full length of the threaded portion as illustrated in Fig. 8 above, a section 29 of the threaded portion of the implant disclosed in Fig. 14 is kept free of recesses. This "recess-free" section 29 of the thread is located in the intermediate portion of the implant and is bordered both apically and coronally by sections of the threaded portion having recesses 20. In the implant shown in Fig.14 both threads 8a, 8b, have at least one complete turn which is free of recesses, these turns being nested, i.e., adjacent, to one another.

### Examples

### 1. Test results - FEM analysis

A FEM (Finite Element Method) analysis was simulated using the design of the third embodiment of the invention as a test implant and is illustrated in Figs. 10a-i. Fig.10a shows the stress profile over the whole length of the implant and Fig.10b-i show the stress profile in the transversal cross-sections 1 to 8 identified in Fig. 10a.

A separate simulation was made with a control implant, which was a Straumann BLT implant and the results of the simulation are illustrated in Figs. 9a-f. Fig.9a shows the stress profile over the whole length of the implant and Fig.9b-f show the stress profile in the transversal cross-sections 1 to 5 identified in Fig. 9a.

The test implant had an implant diameter of 3.5 mm. Simulation was made for a cylindrical drill hole of 2.7 mm maximum diameter. The control implant had an implant diameter of 3.3 mm. Simulation was made for a cylindrical drill hole of 2.7 mm maximum diameter. Even if different diameters the test implant and the control implant were simulated, the relative difference in pressure would be equivalent also for corresponding diameters, i.e. a uniform stress around the circumference for the control implant and a varying stress around the circumference for the test implant.

In Figs. 9a-f, the control implant is illustrated to the left and the stress around the circumference at various cross-sections 1 to 5 are illustrated to the right in Fig. 9b-f, respectively. In Figs. 10a-10i, the test implant is illustrated to the left and the stress around the circumference at various cross-sections 1 to 8 are illustrated to the right in Fig. 10b-i, respectively. In Figs. 9a-9f and 10a-10i, the maximum stress zone are represented in black and the minimum stress zone are represented in light-grey.

As can been seen in Fig. 10a, the maximum stress zone at the surface of the test implant is varying around the circumference of the implant. The stress is greater in a radial direction around the implant following the tread crest, where the stress peaks are provided. The stress valleys of lower stress compared to the stress peaks are provided at the recesses. The number of stress valleys correspond to the number of recesses. Stress valleys in the stress distribution profile are marked in Fig. 10a by the cross-sections 4, 6 and 8 and illustrated in the corresponding Fig. 10e, 10g and 10i.

As can be seen for the control implant, the maximum stress zone is substantially uniform around the circumference along the implant. Stress valleys are not present in the stress distribution profile.

### 2. Test results in animal model

To evaluate the performance of the test implant (using the design of the third embodiment of the invention shown in Fig. 8), additional comparative tests in animal model using a control implant (Straumann BLT implant) were designed and performed as follows.

### 2.1. Study design:

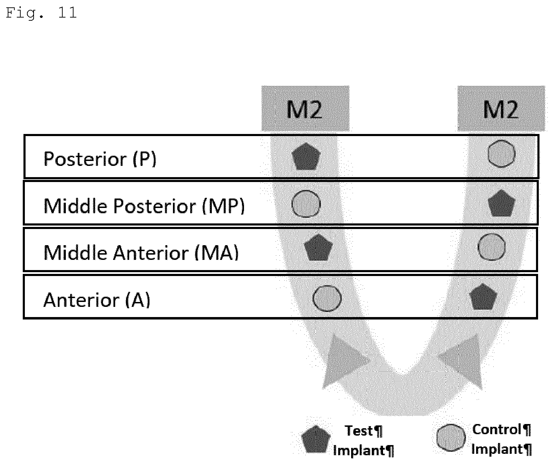

Four test implants and four control implants are placed in the toothless mandible of an adult female Göttingen minipig. The test implant of the present invention and the control implant are placed on contralateral sides of the mandible e.g. Posterior position (P), Middle-Posterior position (MP), Middle-Anterior position (MA), and Anterior (A), as depicted in Fig. 11.

In order to provide comparable data, implants with similar diameters (3.3 mm) and similar lengths (8.0 mm) were selected as shown in Table 1, below.

**Table 1: Experimental groups**

| **Implant** | **Diameter (mm)** | **Length (mm)** | **Final drill (mm)** | **Protocol** |
|---|---|---|---|---|
| Test implant | 3.3 | 8.0 | 3.2 | Drill only |
| Control implant | 3.3 | 8.0 | 2.8 | Profile then Tap |

t = -12 weeks: Mandibular premolars and first molar (p2-p4, M1 position) are extracted bilaterally in a flapless approach.

t = 0 weeks: After a healing period of 3 months an incision is made in the toothless region of the mandible and a full thickness flap is raised. The implants are placed according to the standard protocol as indicated in Table 1. All implants are placed at crestal bone level. Healing caps are placed on all implants, the soft tissue is repositioned and closed with resorbable sutures.

T = +8 weeks: 2 months after implant placement the animal is sacrificed. The implants with the surrounding bone are prepared for histological analysis.

### 2.2. Comparative results:

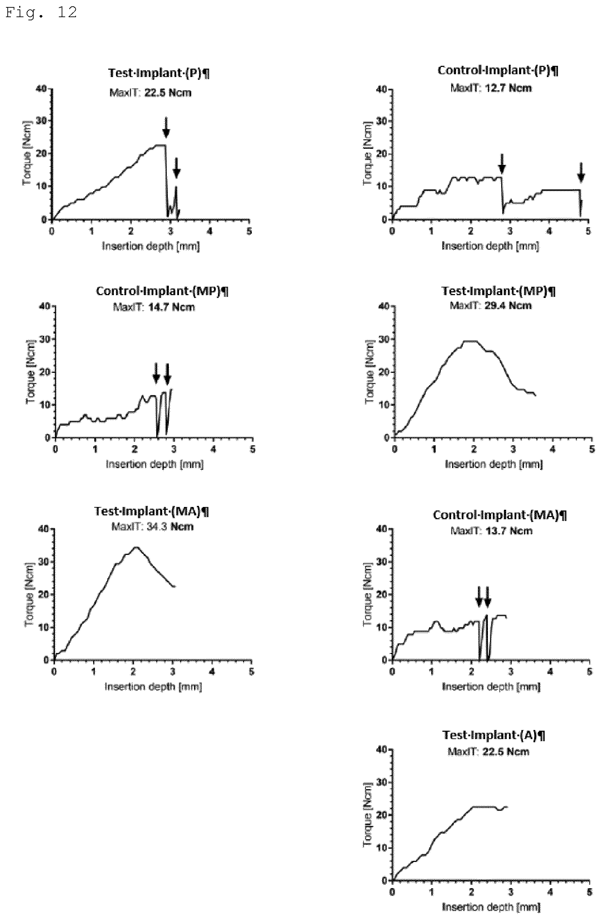

The insertion torque curves, and the maximum insertion torque are compared for each implant located at similar positions on the mandible (Posterior (P), Middle-Posterior (MP), Middle-Anterior (MA), Anterior (A)) as shown in FIG. 12.

In Fig. 12 the curves depicted on the left column are representative of the implants inserted on the left-hand side of the mandible and the curves depicted on the right column are representative of the implants inserted on the right-hand side of the mandible. As it can be seen the torque is applied gradually when inserting the test implants into the mandible at the Posterior (P), Middle-Posterior (MP), and Middle-Anterior (MA) positions compared to the control implants. The test implants are easily and fully inserted into the mandible, hence providing enhanced primary stability.

It is to be noted that the torque of the control implant located at the Anterior (A) position could not be measured due to a malfunction of the insertion torque device.

After 12 weeks, the mandible is prepared for histological studies, as mentioned herein above to observe the bone remodelling around the implants, as depicted in Fig. 13. As it can be observed in Fig. 13, the osteointegration around the test implant compared to the control implant positioned at similar positions (e.g. the Posterior position (P), Middle-Posterior position (MP), Middle-Anterior position (MA) and Anterior position (A)) shows similar osteointegration results or even better osteointegration (e.g. in the middle-posterior position (MP)). The bone is surrounding the test and the control implants, showing good osteointegration.

As shown in Fig. 12 the test implant is inserted in a continuous manner compared to the control implant without impacting or stressing the bone structure of the jaw. As it can be seen in Fig. 13, a good bone remodelling can be observed around the test implant, hence showing a good osteointegration around the implant.

### Legend

dental implant 1
implant body 2
apical portion 3
coronal portion 4
intermediate portion 5
central longitudinal axis 6
connection interface 7
blind bore 7a
anti-rotation means 7b
thread 8, 8a, 8b
thread crest 9
thread root 10
thread flanks 11a-11b
recess 20
radially inner most point 22 of the recess 20
recess borderline 22a
recess coronal border point 23
recess apical border point 24
crest line 26
section of the threaded portion 29
thread turn free of recess 30

## Claims

1. A dental implant (1) for implantation in bone tissue, comprising
an implant body (2) having an apical portion (3), a coronal portion (4), and preferably an intermediate portion (5) extending between the apical portion and the coronal portion;
a central longitudinal axis (6) extending from the apical portion to the coronal portion;
a threaded portion extending along the central longitudinal axis (6), the threaded portion comprising a core having a core surface from which at least one thread (8) extends radially outwards, the at least one thread (8) having a thread crest (9), a thread root (10) arranged at a thread depth from the thread crest, and thread flanks (11a-11b) extending between the thread crest (9) and the thread root (10);
the thread extending in a helical manner over the apical portion, the intermediate portion, if present, and at least a portion of the coronal portion;
the thread (8) comprising a plurality of recesses (20) interrupting the thread (8),
wherein recesses of the plurality of recesses (20) have each time a base defined as a region of the recess surface that is planar and forming a flat base of the recess, the flat base extending in a plane **characterized in that** said plane is parallel to the central longitudinal axis or to a plane parallel to a plane tangent to the core surface at a point corresponding to the intersection of the core surface with a radius of the core crossing a radially inner most point (22) of the recess, and **in that** the base of each of the plurality of recesses (20) is each time at a radial distance from the longitudinal axis (6) that is equal or greater than the radius of the core at the axial location of the radially inner most point.

2. The dental implant (1) according to claim 1, **characterized in that** the surface of each of the plurality of recesses (20) is planar and extends in the plane of the base.

3. The dental implant (1) according to claim 1 or 2, **characterized in that** the radial distance is greater than the radius of the core, wherein the difference between the radial distance and the radius of the core can range from 30% to 5%, preferably from 20% to 10% of the thread depth.

4. The dental implant (1) according to claim1 or 2, **characterized in that** the radial distance is substantially equal to the radius of the core.

5. The dental implant (1) according to any one of the previous claims, **characterized in that** the recesses (20) extend each time axially on each side of the thread crest (9) by up to 50%, preferably 30% of a thread pitch.

6. The dental implant (1) according to any one of the previous claims, **characterized in that** the recesses (20) extend each time circumferentially over a circular sector having an angle of 30° to 150°, preferably 90° to 130°, more preferably 120°, measured in a transverse plane to the longitudinal axis, the transverse plane forming an angle corresponding to the helix angle with the longitudinal central axis.

7. The dental implant (1) according to any one of the previous claims, **characterized in that** two consecutive recesses (20) of the plurality of recesses are each time free of an intersection zone.

8. The dental implant (1) according to any one of the previous claims, **characterized in that** the circular sector angles subtended by two consecutive recesses (20) overlap each time by 10% to 30% of the circular sector angles, preferably by 20%.

9. The dental implant (1) according to any one of the previous claims, **characterized in that** the plurality of recesses (20) are circumferentially offset with respect to each other, wherein an angle subtended by the radii crossing corresponding points of two consecutive recesses (20) is each time preferably constant over the length of the implant, and chosen in a range from 60° to 120°, measured in a plane perpendicular to the central longitudinal axis (6).

10. The dental implant (1) according to any one of claims 1 to 9, **characterized in that** the plurality of recesses (20) are arranged along a helical path running in the same direction as the thread, preferably extending up to the apical end of the implant.

11. The dental implant (1) according to any one of claims 1 to 9, **characterized in that** the plurality of recesses (20) are arranged along a helical path running in the opposite direction as the thread, preferably extending up to the apical end of the implant.

12. The dental implant (1) according to any one of claims 1 to 9, **characterized in that** the plurality of recesses (20) are arranged in a plurality of groups, wherein the recesses of each group are arranged each time along a straight line associated to each group and extending from apical to coronal.

13. The dental implant (1) according to claim 12, **characterized in that** the recesses of each group are present on the straight line associated to the group every two thread turns of the thread.

14. The dental implant (1) according to any one of the previous claims, **characterized in that** the thread (8) is a multiple lead thread, preferably a double lead thread.

## Patentansprüche

1. Ein Zahnimplantat (1) zum Einsetzen in Knochengewebe, umfassend
einen Implantatkörper (2) mit einem apikalen Abschnitt (3), einem koronalen Abschnitt (4) und vorzugsweise einem Zwischenabschnitt (5), der sich zwischen dem apikalen Abschnitt und dem koronalen Abschnitt erstreckt;
eine zentrale Längsachse (6), die sich vom apikalen Abschnitt zum koronalen Abschnitt erstreckt;
einen Gewindeabschnitt, der sich entlang der zentralen Längsachse (6) erstreckt, wobei der Gewindeabschnitt einen Kern mit einer Kernoberfläche umfasst, von der sich mindestens ein Gewindegang (8) radial nach außen erstreckt, wobei der mindestens eine Gewindegang (8) eine Gewindespitze (9), einen in einer Gewindetiefe von der Gewindespitze angeordneten Gewindegrund (10), sowie sich zwischen der Gewindespitze (9) und dem Gewindegrund (10) erstreckende Gewindeflanken (11a-11b) aufweist;
wobei sich das Gewinde schraubenförmig über den apikalen Abschnitt, den gegebenenfalls vorhandenen Zwischenabschnitt und mindestens einen Teil des koronalen Abschnitts erstreckt;
wobei das Gewinde (8) eine Vielzahl von Aussparungen (20) umfasst, die das Gewinde (8) unterbrechen,
wobei Aussparungen der Vielzahl von Aussparungen (20) jeweils eine Basis aufweisen, die als ein Bereich der Aussparungsfläche definiert ist, der eben ist und eine flache Basis der Aussparung bildet, wobei sich die flache Basis in einer Ebene erstreckt, **dadurch gekennzeichnet, dass** die Ebene parallel zur zentralen Längsachse oder zu einer Ebene parallel zu einer Ebene erstreckt, die die Kernoberfläche an einem Punkt tangiert, der dem Schnittpunkt der Kernoberfläche mit einem Radius des Kerns entspricht, der einen radial innersten Punkt (22) der Aussparung kreuzt, und dadurch dass sich die Basis jeder der mehreren Aussparungen (20) jeweils in einem radialen Abstand von der Längsachse (6) befindet, der gleich oder größer ist als der Radius des Kerns an der axialen Position des radial innersten Punktes.

2. Das Zahnimplantat (1) nach Anspruch 1, **dadurch gekennzeichnet, dass** die Oberfläche jeder der Vielzahl von Aussparungen (20) eben ist und sich in der Ebene der Basis erstreckt.

3. Das Zahnimplantat (1) gemäß Anspruch 1 oder 2, **dadurch gekennzeichnet, dass** der radiale Abstand größer ist als der Radius des Kerns, wobei die Differenz zwischen dem radialen Abstand und dem Radius des Kerns zwischen 30% und 5%, vorzugsweise zwischen 20% und 10% der Gewindetiefe, betragen kann.

4. Das Zahnimplantat (1) gemäß Anspruch 1 oder 2, **dadurch gekennzeichnet, dass** der radiale Abstand im Wesentlichen dem Radius des Kerns entspricht.

5. Das Zahnimplantat (1) gemäß einem der vorstehenden Ansprüche, **dadurch gekennzeichnet, dass** sich die Aussparungen (20) jeweils axial auf beiden Seiten der Gewindespitze (9) um bis zu 50%, vorzugsweise 30%, einer Gewindesteigung erstrecken.

6. Das Zahnimplantat (1) gemäß einem der vorstehenden Ansprüche, **dadurch gekennzeichnet, dass** sich die Aussparungen (20) jeweils in Umfangsrichtung über einen Kreissektor mit einem Winkel von 30° bis 150° erstreckt, vorzugsweise 90° bis 130°, noch bevorzugter 120°, gemessen in einer zur Längsachse quer verlaufenden Ebene, wobei die zur Längsachse quer verlaufenden Ebene mit der zentralen Längsachse einen Winkel bildet, der dem Steigungswinkel entspricht.

7. Das Zahnimplantat (1) gemäß einem der vorstehenden Ansprüche, **dadurch gekennzeichnet, dass** jeweils zwei aufeinanderfolgende Aussparungen (20) aus der Vielzahl von Aussparungen jeweils frei von einem Schnittbereich sind.

8. Das Zahnimplantat (1) gemäß einem der vorstehenden Ansprüche, **dadurch gekennzeichnet, dass** sich die von zwei aufeinanderfolgenden Aussparungen (20) aufgespannten Kreissektorwinkel jeweils um 10% bis 30% der Kreissektorwinkel, vorzugsweise um 20%, überlappen.

9. Das Zahnimplantat (1) gemäß einem der vorstehenden Ansprüche, **dadurch gekennzeichnet, dass** die Vielzahl von Aussparungen (20) in Umfangsrichtung zueinander versetzt sind, wobei der Winkel, den die Radien einschließen, die entsprechende Punkte zweier aufeinanderfolgender Aussparungen (20) schneiden, über die Länge des Implantats jeweils vorzugsweise konstant ist und in einem Bereich von 60° bis 120° gewählt wird, gemessen in einer Ebene senkrecht zur zentralen Längsachse (6).

10. Das Zahnimplantat (1) gemäß einem der Ansprüche 1 bis 9, **dadurch gekennzeichnet, dass** die Vielzahl von Aussparungen (20) entlang einer spiralförmigen Bahn angeordnet sind, die in derselben Richtung wie das Gewinde verläuft und sich vorzugsweise bis zum apikalen Ende des Implantats erstreckt.

11. Das Zahnimplantat (1) gemäß einem der Ansprüche 1 bis 9, **dadurch gekennzeichnet, dass** die Vielzahl von Aussparungen (20) entlang einer spiralförmigen Bahn angeordnet sind, die in entgegengesetzter Richtung zum Gewinde verläuft und sich vorzugsweise bis zum apikalen Ende des Implantats erstreckt.

12. Das Zahnimplantat (1) gemäß einem der Ansprüche 1 bis 9, **dadurch gekennzeichnet, dass** die Vielzahl von Aussparungen (20) in einer Vielzahl von Gruppen angeordnet sind, wobei die Aussparungen jeder Gruppe jeweils entlang einer jeder Gruppe zugeordneten Geraden angeordnet sind, die sich von apikal nach koronal erstreckt.

13. Das Zahnimplantat (1) gemäß Anspruch 12, **dadurch gekennzeichnet, dass** die Aussparungen jeder Gruppe auf der der Gruppe zugeordneten Geraden alle zwei Gewindegänge des Gewindes angeordnet sind.

14. Das Zahnimplantat (1) gemäß einem der vorstehenden Ansprüche, **dadurch gekennzeichnet, dass** das Gewinde (8) ein Mehrfachgewinde, vorzugsweise ein Doppelgewinde, ist.

## Revendications

1. Implant dentaire (1) destiné à être implanté dans un tissu osseux, comprenant
un corps d'implant (2) comportant une partie apicale (3), une partie coronaire (4) et, de préférence, une partie intermédiaire (5) s'étendant entre la partie apicale et la partie coronaire ;
un axe longitudinal central (6) s'étendant de la partie apicale à la partie coronaire ;
une partie filetée s'étendant le long de l'axe longitudinal central (6), la partie filetée comprenant un noyau présentant une surface de noyau à partir de laquelle au moins un filet (8) s'étend radialement vers l'extérieur, ledit au moins un filet (8) comportant une crête de filet (9), un fond de filet (10) disposée à une profondeur de filet par rapport à la crête de filet, et des flancs de filet (11a-11b) s'étendant entre la crête de filet (9) et le fond de filet (10) ;
le filet s'étendant de manière hélicoïdale sur la partie apicale, la partie intermédiaire, le cas échéant, et au moins une partie de la partie coronale ;
le filet (8) comprenant une pluralité d'évidements (20) interrompant le filet (8),
des évidements de la pluralité d'évidements (20) présentant à chaque fois une base définie comme une région de la surface de l'évidement qui est plane et formant une base plate de l'évidement, la base plate s'étendant dans un plan, **caractérisé en ce que** ledit plan est parallèle à l'axe longitudinal central ou à un plan parallèle à un plan tangent à la surface du noyau en un point correspondant à l'intersection de la surface du noyau avec un rayon du noyau traversant un point radialement le plus intérieur (22) de l'évidement, et **en ce que** la base de chacun des évidements (20) se trouve à chaque fois à une distance radiale de l'axe longitudinal (6) qui est égale ou supérieure au rayon du noyau à l'emplacement axial du point le plus intérieur dans le sens radial.

2. L'implant dentaire (1) selon la revendication 1, **caractérisé en ce que** la surface de chacun de la pluralité des évidements (20) est plane et s'étend dans le plan de la base.

3. Implant dentaire (1) selon la revendication 1 ou 2, **caractérisé en ce que** la distance radiale est supérieure au rayon du noyau, la différence entre la distance radiale et le rayon du noyau pouvant varier de 30 % à 5 %, de préférence de 20 % à 10 %, de la profondeur du filet.

4. Implant dentaire (1) selon la revendication 1 ou 2, **caractérisé en ce que** la distance radiale est sensiblement égale au rayon du noyau.

5. Implant dentaire (1) selon l'une quelconque des revendications précédentes, **caractérisé en ce que** les évidements (20) s'étendent chacun axialement de chaque côté de la crête du filet (9) sur une distance pouvant aller jusqu'à 50 %, de préférence 30 %, d'un pas de filet.

6. Implant dentaire (1) selon l'une quelconque des revendications précédentes, **caractérisé en ce que** les évidements (20) s'étendent à chaque fois circonférentiellement sur un secteur circulaire formant un angle de 30° à 150°, de préférence de 90° à 130°, de préférence 120°, mesuré dans un plan transversal à l'axe longitudinal, le plan transversal formant avec l'axe central longitudinal un angle correspondant à l'angle d'hélice.

7. L'implant dentaire (1) selon l'une quelconque des revendications précédentes, **caractérisé en ce que** deux évidements consécutifs (20) parmi la pluralité d'évidements sont à chaque fois dépourvus de zone d'intersection.

8. L'implant dentaire (1) selon l'une quelconque des revendications précédentes, **caractérisé en ce que** les angles de secteur circulaire sous-tendus par deux évidements consécutifs (20) se chevauchent à chaque fois de 10 % à 30 % de ces angles de secteur circulaire, de préférence de 20 %.

9. L'implant dentaire (1) selon l'une quelconque des revendications précédentes, **caractérisé en ce que** la pluralité d'évidements (20) est décalée circonférentiellement les uns par rapport aux autres, l'angle sous-tendu par les rayons croisant des points correspondants de deux évidements consécutifs (20) étant à chaque fois de préférence constant sur la longueur de l'implant, et choisi dans une plage comprise entre 60° et 120°, mesuré dans un plan perpendiculaire à l'axe longitudinal central (6).

10. L'implant dentaire (1) selon l'une quelconque des revendications 1 à 9, **caractérisé en ce que** la pluralité d'évidements (20) est disposée le long d'un trajet hélicoïdal s'étendant dans la même direction que le filet, s'étendant de préférence jusqu'à l'extrémité apicale de l'implant.

11. Implant dentaire (1) selon l'une quelconque des revendications 1 à 9, **caractérisé en ce que** la pluralité d'évidements (20) est disposée le long d'un tracé hélicoïdal s'étendant dans la direction opposée à celle du filet, s'étendant de préférence jusqu'à l'extrémité apicale de l'implant.

12. L'implant dentaire (1) selon l'une quelconque des revendications 1 à 9, **caractérisé en ce que** la pluralité d'évidements (20) est disposée en une pluralité de groupes, les évidements de chaque groupe étant à chaque fois disposés le long d'une ligne droite associée à chaque groupe et s'étendant de l'apex vers la couronne.

13. Implant dentaire (1) selon la revendication 12, **caractérisé en ce que** les évidements de chaque groupe sont présents sur la ligne droite associée au groupe tous les deux tours du filet.

14. L'implant dentaire (1) selon l'une quelconque des revendications précédentes, **caractérisé en ce que** le filet (8) est un filet à pas multiple, de préférence un filet à double pas.
